# EUROPÄISCHE PATENTANMELDUNG

(11) **EP 2 921 325 A1**
(43) Veröffentlichungstag der Anmeldung: **23.09.2015**
(21) Anmeldenummer: 15000450.5
(22) Anmeldetag: 14.02.2015
(51) Int. Cl.: B60G 17/015, B60W 10/04, B60W 10/18, B60W 10/22, B62D 1/28, G05D 1/02, G06F 3/01

(54) **VERFAHREN UND VORRICHTUNG ZUM FERNSTEUERN EINES KRAFTFAHRZEUGS, ELEKTRONISCHES KRAFTFAHRZEUGSTEUERSYSTEM UND KRAFTFAHRZEUG DAMIT**

(30) Priorität: 19.03.2014 DE 102014003913
(71) Anmelder: WABCO GmbH, 30453 Hannover (DE)
(72) Erfinder: Dieckmann, Thomas, 30982 Pattensen (DE); Merten, Heiner, 31188 Holle (DE)
(74) Vertreter: Lauerwald, Jörg

(57) **Zusammenfassung**

Die Erfindung betrifft ein Verfahren zum Fernsteuern eines Kraftfahrzeugs 28, 40, insbesondere Nutzfahrzeug, wobei das Kraftfahrzeug 28, 40 mindestens eine Steuereinheit 20 aufweist, die mit mindestens einem elektronischen Fahrzeugsystem zur Kraftfahrzeugssteuerung kommunikativ in Verbindung steht. Dazu weist das Kraftfahrzeug 28, 40 mindestens eine Gesten-Empfangseinrichtung 2 auf, die Signale 4 aus einem Bereiche 38 außerhalb des Kraftfahrzeugs 28, 40 empfängt. Aus den Signalen 4 werden in einer LogikEinrichtung 7 Gesteninformationen 16 ermittelt für den Fall, dass sich ein Bediener 36 innerhalb des von der Gesten-Empfangseinrichtung 2 erfassten Bereiches außerhalb des Kraftfahrzeugs 28, 40 befindet. Aus diesen Gesteninformationen 16 werden Steuerbefehle 18 erzeugt, welche der mindestens einen Steuereinheit 20 zur Kraftfahrzeugsteuerung übergeben werden, um das Kraftfahrzeug 28, 40 anhand der Gesten des Bedieners 36 zu steuern.

Ferner betrifft die Erfindung eine Vorrichtung zum Ausüben eines derartigen Verfahrens, ein elektronisches Kraftfahrzeugsteuersystem zur Fernsteuerung sowie ein Kraftfahrzeug 28, 40 mit einer derartigen Vorrichtung und/oder einem derartigen elektronischen Kraftfahrzeugsteuersystem.

## Beschreibung

Die Erfindung betrifft ein Verfahren zum Fernsteuern eines Kraftfahrzeugs, insbesondere eines Nutzfahrzeugs, gemäß dem Oberbegriff von Anspruch 1 sowie eine Vorrichtung zum Ausführen eines derartigen Verfahrens gemäß dem Oberbegriff von Anspruch 7. Ferner betrifft die Erfindung ein elektronisches Kraftfahrzeugsteuersystem und ein Kraftfahrzeug mit einem derartigen elektronischen Kraftfahrzeugsteuersystem.

Ein elektronisches Kraftfahrzeugsteuersystem weist mindestens ein elektronisches Fahrzeugsystem auf und ist beispielsweise zum Fernsteuern eines Kraftfahrzeugs notwendig, um mittels eines Bedieners von außerhalb des Kraftfahrzeugs ein Fahrmanöver des Kraftfahrzeugs durchzuführen zu können. Dabei kann ein elektronisches Fahrzeugsystem beispielsweise eine elektronische Getriebesteuerung, eine elektronische Motorleistungssteuerung, eine Niveauregulierung einer elektronischen Luftfederungsanlage (ECAS = electronically controlled air suspension), eine elektronisch angetriebene Servolenkung, ein Teil eines elektronischen Bremssystems (EBS) oder ein beliebig anderes elektronisches System sein, welches zum Fernsteuern eines Kraftfahrzeugs nutzbar ist. Über das Kraftfahrzeugsteuersystem werden somit mittels der elektronischen Fahrzeugsysteme zum Beispiel der Lenkeinschlag, die Kraftstoffzufuhr und Bremse entsprechend vom Bediener vorgegebener Steuersignale betätigt bzw. eingestellt.

Aus DE 10 2012 200 725 A1 ist ein Kraftfahrzeugsteuersystem zur Fernsteuerung von Kraftfahrzeugen, insbesondere PKWs, bekannt, welches eine Fernbedienungseinrichtung aufweist, mit der ein Bediener, welcher sich außerhalb des Kraftfahrzeugs befindet, ein Fahrmanöver des Kraftfahrzeugs veranlassen und durchführen kann. Nachteilig ist hier jedoch die Fernbedienungseinrichtung als separates Bedienelement, da dieses gerade im Nutzfahrzeugbereich oftmals starken Belastungen ausgesetzt ist und eine hohe Verlustanfälligkeit aufweist.

Ein weiteres elektronisches Kraftfahrzeugsteuersystem ist beispielsweise die elektronisch gesteuerte Luftfederungsanlage (ECAS), wobei die Niveauregulierung als elektronisches Fahrzeugsystem das Niveau eines luftgefederten Kraftfahrzeugs einstellt. Herkömmlicherweise ist an die Luftfederungsanlage ein Handbediengerät mit Spiralkabel angeschlossen, um zum Beispiel ein leichtes Anpassen des Fahrzeugaufbaus an die Höhe einer Laderampe zu ermöglichen. Durch die begrenzte Länge des Spiralkabels ist jedoch der Aktionskreis der Bedienperson stark eingeschränkt.

DE 199 05 172 A1 zeigt ein elektronisches Kraftfahrzeugsteuersystem mit einem drahtlosen Fernbediensystem einer elektronisch gesteuerten Luftfederungsanlage in Nutzkraftfahrzeugen. Die dort gezeigte Fernbedieneinheit verfügt zwar über so genannte Verlustschutzmittel, die ein versehentliches Liegenlassen der Fernbedieneinheit im Fahrzeug anzeigen. Dennoch ist ein Verlust der Fernbedieneinheit trotzdem möglich. Ferner entstehen durch ein separates Bedienelement zusätzliche Herstellungs- und Wartungskosten.

Der Erfindung liegt nach alledem die Aufgabe zu Grunde, die Fernsteuerung eines Kraftfahrzeugs über mindestens ein elektronisches Fahrzeugsystem zu verbessern.

Die Erfindung löst diese Aufgabe mit den Merkmalen eines Verfahrens zum Fernsteuern eines Kraftfahrzeugs gemäß Anspruch 1, mit einer Vorrichtung zur Fernsteuerung eines Kraftfahrzeugs gemäß Anspruch 7, mit einem elektronischen Kraftfahrzeugsteuersystem gemäß Anspruch 14, sowie mit einem Kraftfahrzeug gemäß Anspruch 15.

Zur Durchführung des Verfahrens zum Fernsteuern eines Kraftfahrzeugs weist das Kraftfahrzeug mindestens eine Steuereinheit auf, die mit mindestens einem elektronischen Fahrzeugsystem zur Kraftfahrzeugsteuerung kommunikativ in Verbindung steht.

Dabei handelt es sich bei der Steuereinheit bevorzugt um die Steuereinheit des jeweiligen zu steuernden Fahrzeugsystems. Es ist jedoch ebenso möglich als Steuereinheit eine zusätzliche Datenverarbeitungsvorrichtung vorzusehen, die über eine CPU, einen Speicher sowie Ein- und Ausgänge verfügt, und das zu steuernde elektronische Fahrzeugsystem entsprechend ansteuern kann.

Das Kraftfahrzeug kann sowohl ein Personen- als auch ein Nutzfahrzeug sein.

Ferner weist das Kraftfahrzeug zur Durchführung des erfindungsgemäßen Verfahrens mindestens eine Gesten-Empfangseinrichtung auf. Bei der Gesten-Empfangseinrichtung handelt es sich insbesondere um eine Kamera, vorteilhaft auch Stereo-Kamera, oder eine Antenne, die Signale, in denen Gesteninformationen enthalten sind, empfängt, wobei eine Kamera als Signale ein entsprechendes Kamerabild empfängt und eine Antenne elektromagnetische Felder eines Funknetzes oder WLANs als Signale empfängt.

Die Gesten-Empfangseinrichtung empfängt dabei Signale aus einem Bereich außerhalb des Kraftfahrzeugs. Mit der mindestens einen Gesten-Empfangseinrichtung, beispielsweise als Kamera, wird ein Abbild des Umgebungsbereiches des Kraftfahrzeugs aufgenommen, oder mit einer Gesten-Empfangseinrichtung, beispielsweise als Antenne, werden elektromagnetische Felder eines Funknetzes oder eines WLANs innerhalb des Umgebungsbereiches des Kraftfahrzeugs empfangen, in dem sich ein Bediener zum Fernsteuern des Kraftfahrzeugs befindet. Der Bediener kann der Fahrer des Kraftfahrzeugs sein, der zum Fernsteuern des Kraftfahrzeugs das Kraftfahrzeug verlassen hat oder ein Einweiser, der das Kraftfahrzeug fernsteuert.

In einer Logik-Einrichtung werden aus den Signalen der Gesten-Empfangseinrichtung, in denen Gesteninformationen aus Gesten des Bedieners enthalten sind, diese Gesteninformationen ermittelt. Dabei kann als Geste beispielsweise ein ein- oder beidhändiges Vor- oder Zurückwinken angesehen werden, um entsprechende elektronische Fahrzeugsysteme, wie zum Beispiel eine elektronische Motorleistungssteuerung und eine elektronische Getriebesteuerung, zu steuern, welche das Kraftfahrzeug vorwärts und/oder rückwärts bewegen können. Ein ein- oder beidhändiges Herauf- oder Herabwinken kann zum Beispiel als Geste angesehen werden, um eine Niveauregulierung einer elektronischen ECAS-Anlage auf ein bestimmtes Niveau des Kraftfahrzeugs zu regeln. Mit einer seitlichen Winkbewegung kann zudem der Lenkeinschlag über eine elektronisch angetriebene Servolenkung geregelt werden. Ferner kann zu der jeweiligen Geste auch die Geschwindigkeit, mit der die Geste ausgeübt wird, erfasst werden, um die Dynamik der Fernsteuerung anzuzeigen, so dass das Fahrzeug schnell oder langsam manövriert werden kann. Eine entsprechende Stopp-Geste, wie zum Beispiel eine abgewinkelte Hand mit senkrecht aufgestellten Fingern oder das seitliche, waagerechte Ausstrecken beider Arme, bewirkt jederzeit eine Unterbrechung des Fernsteuerungsvorgangs, indem das elektronische Bremssystem aktiviert wird.

Anschließend werden aus den Gesteninformationen der erfassten Gesten Steuerbefehle erzeugt. Diese Steuerbefehle werden dann mittels der Logik-Einrichtung mindestens einer Steuereinheit zur Kommunikation mit mindestens einem elektronischen Fahrzeugsystem übergeben, um das Kraftfahrzeug anhand dieser Gesten zu steuern.

Das Kraftfahrzeug kann somit vorteilhaft ohne ein separates Bedienelement von einem Bediener außerhalb des Kraftfahrzeugs gesteuert werden. Es können vorteilhaft Kommandos an das Kraftfahrzeug allein über Gesten übermittelt werden, so dass das Kraftfahrzeug auch ohne ein separates Bedienelement auf entsprechende Anforderungen reagiert. Durch die erfindungsgemäße Verwendung einfacher Gesten aus den üblichen Bewegungen, beispielsweise eines Einweisers für ein Kraftfahrzeug, lässt sich das Kraftfahrzeug ohne großen Lernaufwand intuitiv steuern.

Gemäß einer bevorzugten Ausführungsform der Erfindung weist die Logik-Einrichtung eine Freigabeeinrichtung auf, mit der das Verfahren zum Fernsteuern des Kraftfahrzeugs freigegeben wird, falls der Bediener als autorisiert erkannt wird. Die Autorisierung kann durch ein entsprechendes Freigabesignal erfolgen oder durch ermittelte Erkennungsmerkmale eines Bedieners.

Zur Autorisierung eines Bedieners werden mittels einer geeigneten Datenverarbeitung aus den mittels der Gesten-Empfangseinrichtung empfangenen Signalen Erkennungsmerkmale ermittelt und einer Analyse unterzogen. Handelt es sich beispielsweise bei der Gesten-Empfangseinrichtung um mindestens eine Kamera, werden mittels einer geeigneten Bildverarbeitung beispielsweise biometrische Merkmalsparameter, wie Gesichtsmuster oder andere beschreibende Körpermerkmale, als Erkennungsmerkmale festgehalten oder auch eine vorbestimmte Geste des Bedieners als vorbestimmtes Bewegungsmuster als Erkennungsmerkmal erfasst.

Handelt es sich hingegen bei der Gesten-Empfangseinrichtung um eine Antenne, wird aus den empfangenen elektromagnetischen Feldern mittels einer geeigneten Auswertung, beispielsweise durch Erfassung der Veränderung der Amplitude oder durch Auswertung der Dopplerfrequenz, eine vorbestimmte Geste des Bedieners als Erkennungsmerkmal erfasst.

Um einen Bediener als autorisiert zu erkennen, werden die ermittelten Erkennungsmerkmale mit zuvor festgelegten Erkennungsmerkmalen auf Übereinstimmung verglichen. Wird aufgrund einer ermittelten Übereinstimmung der Erkennungsmerkmale ein Bediener erkannt, welcher zum Steuern des elektronischen Fahrzeugsystems berechtigt ist, wird die Fernsteuerung des Kraftfahrzeugs freigegeben.

Alternativ kann die Freigabe durch ein entsprechendes Freigabesignal vorgenommen werden, wobei das Freigabesignal beispielsweise durch Knopfdruck oder über ein mobiles Kommunikationsgerät an die Freigabeeinrichtung übergeben wird.

Gemäß einer weiteren bevorzugten Ausführungsform der Erfindung weist die Logik-Einrichtung eine Auswerteeinrichtung auf, in der die Gesteninformationen und/oder Erkennungsmerkmale aus den Signalen der Gesten-Empfangseinrichtung ermittelt werden. Dazu wird in der Auswerteeinrichtung eine erste Grundauswertung der empfangenen Signale durchgeführt, insbesondere durch geeignete Bildverarbeitungsalgorithmen oder durch Algorithmen zum Auswerten von Veränderungen innerhalb des elektromagnetischen Feldes, um zum Beispiel die Bildmerkmale aus den Bilddaten oder bestimmte Bewegungsmuster aus den Schwankungen in der Struktur des elektromagnetischen Feldes zu extrahieren. Dadurch wird vorteilhaft das Datenvolumen der von der Gesten-Empfangseinrichtung empfangenen Signale auf das Wesentliche bzw. auf die informationstragenden Gesteninformationen und/oder Erkennungsmerkmale verringert.

Ferner weist die Logik-Einrichtung eine Datenverarbeitungseinrichtung zum Erzeugen von Steuerbefehlen auf, wobei die Steuerbefehle aus den Gesteninformationen der erfassten Gesten des Bedieners erzeugt werden. Diese Steuerbefehle werden dann von der Logik-Einrichtung der mindestens einen Steuereinheit zur Kommunikation mit dem mindestens einem elektronischen Fahrzeugsystem zur Kraftfahrzeugsteuerung übergeben.

Die Logik-Einrichtung stellt jedoch lediglich einen funktionalen Zusammenhang dar und ist nicht auf eine bauliche Einheit beschränkt. Die in der Logik-Einrichtung enthaltenen Einrichtungen, wie beispielsweise Auswerteeinrichtung, Datenverarbeitungseinrichtung und Freigabeeinrichtung, können baulich getrennte Einrichtungen sein oder in einem gemeinsamen Bauteil integriert sein.

In einer weiteren bevorzugten Ausführungsform der Erfindung werden als Signale, die von der Gesten-Empfangseinrichtung empfangen wurden, Bilddaten erzeugt, wobei die Gesten-Empfangseinrichtung eine Kamera eines vorhandenen kamerabasierten Fahrerassistenzsystems ist und wobei das Fahrerassistenzsystem als eine erste Funktionalität mindestens eine Regelfunktion und/oder eine Signalisierungsfunktion aufweist und als eine weitere Funktionalität das Erzeugen der Gesteninformationen der erfassten Gesten des Bedieners zur Kraftfahrzeugsteuerung aufweist.

Als Kameras vorhandener Fahrerassistenzsysteme eignet sich zum Beispiel die tages- und nachtsensitive LDW-Kamera (LDW = lane departure warning) im Frontbereich des Kraftfahrzeugs, welche als erste Funktionalität für die Spur- und Verkehrszeichenerkennung und zur Erzeugung einer Warnung und/oder eines aktiven Lenkeingriffs genutzt wird, wenn das Fahrzeug von der Spur abzukommen droht, sowie die am Heck des Kraftfahrzeugs angeordnete Rückfahrkamera, die als erste Funktionalität schwer oder nicht einsehbare Bereiche überwacht. Gleichermaßen können Kameras, wie BSD-Kameras (BSD = blind spot detection), zur Überwachung so genannter "Toter Winkel" als erste Funktionalität eingesetzt werden, die den Bereich seitlich des Kraftfahrzeugs erfassen.

Erfindungsgemäß erfolgt eine Verknüpfung des kamerabasierten Fahrerassistenzsystems mit der erfindungsgemäßen Gestensteuerung zum Fernsteuern eines Kraftfahrzeugs durch eine Erweiterung der Funktionalität des Fahrerassistenzsystems bzw. des Kamerasystems. Als zusätzliche Funktionalität zu der bereits vorhandenen Funktionalität werden die von der Kamera erfassten Gesten des Bedieners in Gesteninformationen umgewandelt.

Der Vorteil bei der Verwendung von bestehender Videotechnik bzw. vorhandener Kamera oder Kameras besteht darin, dass zur Erfassung der Gesten zum Fernsteuern des Kraftfahrzeugs vorteilhaft kein separater, zusätzlicher Sensor gebraucht wird.

In einer weiteren bevorzugten Ausführungsform der Erfindung erfolgt eine erste Grundauswertung der Bilddaten bereits innerhalb des Fahrerassistenzsystems. Herkömmlicherweise weisen die Fahrerassistenzsysteme Einrichtungen zur Bildverarbeitung auf, um einzelne Bildmerkmale aus den Bilddaten zu extrahieren. Die Bildsignale der Kamera werden dabei bevorzugt mittels durchgehender Datenleitungen, insbesondere elektronischer Datenleitung oder Glasfaser, übertragen. Da diese aufwändig zu installieren sind und zudem auch für Beschädigungen anfällig sind, befindet sich die Auswerteeinrichtung bevorzugt in Kameranähe bzw. als Elektronik innerhalb der Kamera.

Die Erfindung ist jedoch nicht auf eine Übertragung der Bildsignale der Kamera zur weiteren Verarbeitung über durchgehende Datenleitungen beschränkt. Vielmehr sind jedwede Übertragungstechniken, wie zum Beispiel drahtlos per elektromagnetischer Wellen, beispielsweise mittels WLAN oder Bluetooth-Übertragung, anwendbar.

Werden für die Grundauswertung der Bilddaten vorhandene Fahrerassistenzsysteme herangezogen, lässt sich vorteilhaft auch die Bildverarbeitung dieser Systeme im Wesentlichen übernehmen. Erfindungsgemäß wird die Mustererkennung zur Merkmalsgewinnung entsprechend der Erkennungsmerkmale und der Gesteninformationen in einem bestehenden Fahrerassistenzsystem ergänzt.

Gemäß einer weiteren bevorzugten Ausführungsform der Erfindung werden die Gesteninformationen und/oder die aus den Gesteninformationen erzeugten Steuerbefehle von der Logik-Einrichtung über einen CAN-Bus (CAN = controller area network) des Kraftfahrzeugs derjenigen Steuereinheit übergeben, die mit dem mindestens einen zu steuernden Fahrzeugsystem kommunikativ in Verbindung steht.

Um den Aufwand für die Verkabelung innerhalb des Kraftfahrzeugs zu minimieren, werden üblicherweise eine Vielzahl gleichberechtigter Komponenten an eine gemeinsame Datenleitung angeschlossen. Der Datenfluss wird insbesondere bei dem CAN-Bussystem über ein Zugriffsverfahren gesteuert.

In einer weiteren bevorzugten Ausführungsform der Erfindung ist von den mindestens einen elektronischen Fahrzeugsystemen zur Kraftfahrzeugsteuerung ein zu steuerndes Fahrzeugsystem Teil einer elektronischen Luftfederungsanlage (ECAS) des Kraftfahrzeugs, insbesondere einer Niveauregulierung. Das Anheben und Absenken eines Fahrzeugaufbaus des Kraftfahrzeugs wird erfindungsgemäß anhand von erkannten Gesten eines Bedieners durchgeführt. Dazu weist die Niveauregulierung ein Schaltventil auf, welches von einer Steuereinheit ansteuerbar ist.

Erfindungsgemäß werden aus den von der Gesten-Empfangseinrichtung empfangenen Signalen Gesteninformationen ermittelt. Anhand dieser Gesteninformationen werden Steuerbefehle erzeugt und der Steuereinheit der Niveauregulierung als Eingangsdaten zugeführt. Das Schaltventil des ECAS-Systems wird dann entsprechend dieser Eingangsdaten angesteuert, um den Fahrzeugaufbau des Kraftfahrzeugs anzuheben oder abzusenken.

Somit ist vorteilhaft ein leichtes Anpassen des Fahrzeugaufbaus zum Beispiel an die Höhe einer Laderampe durch einen Bediener möglich, wobei sich der Bediener innerhalb eines Bereiches außerhalb des Kraftfahrzeugs befindet, von wo aus er ein uneingeschränktes Sichtfeld auf das Kraftfahrzeug und die Laderampe besitzt.

Gemäß einer weiteren bevorzugten Ausführungsform der Erfindung wird das Kraftfahrzeug anhand der Steuerbefehle, welche aus den Gesteninformationen der erfassten Gesten des Bedieners erzeugt werden, zum Ankuppeln an einen Anhängerfahrzeug entsprechend manövriert.

So ist es zum Beispiel vorteilhaft möglich, eine Sattelzugmaschine einfach über Gesten zum Ankuppeln an einen Sattelauflieger zu steuern, indem ein Bediener, etwa der Fahrer oder ein separater Einweiser, durch Heranwinken die Sattelzugmaschine an den Sattelauflieger heran holen kann. Dazu wird die Winkbewegung von der Gesten-Empfangseinrichtung erfasst und die Signale der Gesten-Empfangseinrichtung in der Grundauswertung in die entsprechende Gesteninformation transformiert. Eine entsprechende Datenverarbeitung erzeugt aus diesen Gesteninformationen mindestens ein entsprechendes Steuersignal, welches der Steuereinheit mindestens eines elektronischen Fahrzeugsystems, zum Beispiel der elektronischen Motorleistungssteuerung und/oder der elektronischen Getriebesteuerung, übergeben wird.

Bei Fahrzeugen mit elektronisch angetriebener Servolenkung können auch Gesten zum seitlichen Steuern bzw. Lenken des Kraftfahrzeugs umgesetzt werden, so dass ein komplettes Manövrieren des Kraftfahrzeugs von außen möglich wird, wobei unter Manövrieren eine kontrollierte Lage- oder Positionsänderung des Kraftfahrzeugs verstanden wird. Dazu werden die Steuersignale, die aus den entsprechenden Gesteninformationen erzeugt wurden, an die Steuereinheit der elektronisch angetriebenen Servolenkung übergeben.

Befindet sich die Sattelzugmaschine in einer Linie mit dem Sattelauflieger, kann der Bediener über entsprechende Gesten zusätzlich die Niveauregelung derart steuern, dass die Sattelzugmaschine zum Ankuppeln unter den Sattelauflieger fahren kann.

Ferner wird erfindungsgemäß ein Computerprogramm bereitgestellt, welches Softwarecodeabschnitte mit Anweisungen zum Ausführen eines vorstehend beschriebenen Verfahrens auf mindestens einem Prozessor aufweist. Bei derartigen Prozessoren handelt es sich bevorzugt um Mikroprozessoren in einem oder mehreren Steuergeräten des Kraftfahrzeugs. Dabei kann das vorstehend beschriebene Verfahren auch abschnittsweise auf mehreren Prozessoren verteilt ausgeführt werden.

Die Erfindung löst o. g. Aufgabe ferner mit einem elektronischen Kraftfahrzeugsteuersystem zur Fernsteuerung eines Kraftfahrzeugs, insbesondere Nutzfahrzeug, mit Mitteln zum Durchführen des erfindungsgemäßen Verfahrens und/oder mit einer erfindungsgemäßen Vorrichtung zur Fernsteuerung des Kraftfahrzeugs.

Des Weiteren löst die Erfindung die o. g. Aufgabe mit einem Kraftfahrzeug, welches eine erfindungsgemäße Vorrichtung zur Fernsteuerung des Kraftfahrzeugs aufweist und/oder ein elektronisches Kraftfahrzeugsteuersystem mit einer derartigen Vorrichtung und/oder Mittel zur Durchführung eines erfindungsgemäßen Verfahrens zum Fernsteuern des Kraftfahrzeugs.

Schließlich löst die Erfindung o. g. Aufgabe durch eine Verwendung einer erfindungsgemäßen Vorrichtung zur Fernsteuerung eines Kraftfahrzeugs, wobei die erfindungsgemäße Vorrichtung in einem Kraftfahrzeug, insbesondere Nutzfahrzeug, angewendet wird.

Eine derartige Verwendung einer erfindungsgemäßen Vorrichtung zur Fernsteuerung eines Kraftfahrzeugs ermöglicht vorteilhaft das Manövrieren des Kraftfahrzeugs ohne ein separates Bedienelement. Dabei ist die Fernsteuerung besonders vorteilhaft von einem Bereich außerhalb des Kraftfahrzeugs aus möglich, der einem Bediener oder Einweiser ein uneingeschränktes Sichtfeld auf das zu manövrierende Kraftfahrzeug und dessen Umfeld bietet, wodurch vorteilhaft die Verkehrssicherheit erheblich erhöht wird.

Ferner ermöglicht die Verwendung der erfindungsgemäßen Vorrichtung das Manövrieren des Kraftfahrzeugs ohne großen Lernaufwand, da die Fernsteuerung über einfache Gesten erfolgt, die ein entsprechender Einweiser intuitiv oder aufgrund der berufsgenossenschaftlichen Vorschriften (BGV D29) verwenden würde.

Weitere Ausführungsformen ergeben sich aus den Ansprüchen sowie aus den anhand der Zeichnung näher erläuterten Ausführungsbeispielen. In der Zeichnung zeigen:
- Fig. 1: ein Blockschaltbild zur Erläuterung des erfindungsgemäßen Verfahrens,
- Fig. 2: ein Blockschaltbild zur Erläuterung der erfindungsgemäßen Verknüpfung aus bestehendem kamerabasierten Fahrerassistenzsystem und der Gestensteuerung,
- Fig. 3: eine schematische Darstellung einer Gestensteuerung zum Ankuppeln einer Sattelzugmaschine an einen Sattelauflieger und
- Fig. 4: eine schematische Darstellung einer Gestensteuerung einer Niveauregulierung.

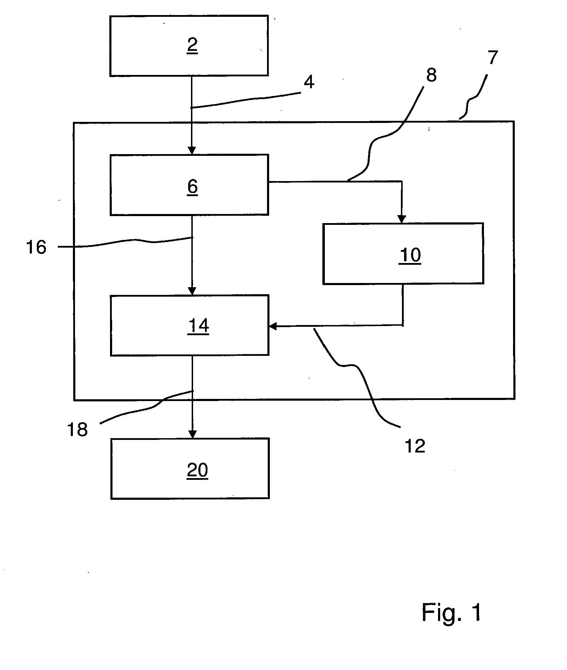

Fig. 1 zeigt ein Blockschaltbild zur Erläuterung des erfindungsgemäßen Verfahrens zum Fernsteuern bzw. Manövrieren eines Kraftfahrzeugs, insbesondere Nutzfahrzeug, wobei die Fernsteuerung des Kraftfahrzeugs über Gesten eines Bedieners erfolgt, der sich innerhalb eines Bereiches außerhalb des Kraftfahrzeugs befindet.

Mittels einer Gesten-Empfangseinrichtung 2 werden Signale 4 eines Umgebungsbereiches des Kraftfahrzeugs erfasst, in dem der Bediener die Gestensteuerung vornimmt, indem beispielsweise eine Kamera als Gesten-Empfangseinrichtung 2 ein Abbild des Umgebungsbereiches des Kraftfahrzeugs aufnimmt oder eine Antenne als Gesten-Empfangseinrichtung 2 elektromagnetische Felder aus dem Umgebungsbereich des Kraftfahrzeugs empfängt. Bevorzugt werden zur Aufnahme von Bilddaten 4 ein oder mehrere Kameras 2 von bereits vorhandenen Fahrerassistenzsystemen verwendet, wobei zur Erhöhung der Sicherheit bzw. der Funktionalität auch infrarotbereichsempfindliche Kameras eingesetzt werden können, um ein Fernsteuern des Kraftfahrzeugs auch im Dunkein noch zu ermöglichen.

Die von der Kamera bzw. den Kameras 2 aufgenommenen Bilddaten 4 werden in einer in einer Logik-Einrichtung 7 enthaltenen Auswerteeinrichtung 6 einer Grundauswertung unterzogen, wobei anhand der Bilddaten 4 eine Bildanalyse mit Algorithmen zur Mustererkennung durchgeführt wird, um die visuellen Informationen in den Bilddaten 4 zu interpretieren.

Aus den Bilddaten 4 können bei der Grundauswertung Erkennungsmerkmale 8, wie zum Beispiel biometrische Merkmalsparameter eines Bedieners, extrahiert werden, um festzustellen, ob der von der Kamera 2 erfasste Bediener zum Fernsteuern des Kraftfahrzeugs autorisiert ist. Dabei können biometrische Merkmalsparameter beispielsweise ein Gesichtsmuster oder ein anderes beschreibendes Körpermerkmal sein.

Werden mittels einer Antenne 2 elektromagnetische Felder 4 empfangen, werden in einer in einer Logik-Einrichtung 7 enthaltenen Auswerteeinrichtung 6 die Bewegungen eines Bedieners in einem elektromagnetischen Feld beispielsweise als Schwankung in der Struktur des Feldes oder durch Veränderungen in der Amplitude der gemessenen Funksignale erfasst und daraus Erkennungsmerkmale 8 ermittelt.

Die in der Auswerteeinrichtung 6 ermittelten Erkennungsmerkmale 8 werden einer Freigabeeinrichtung 10 übergeben. Um eine unbefugte Bedienung der Fernsteuerung des Kraftfahrzeugs auszuschließen, ist in einem nächsten Schritt die Freigabe der Fernsteuerung mittels der Freigabevorrichtung 10 vorgesehen, falls der Bediener als autorisiert erkannt wurde. Dazu werden die ermittelten Erkennungsmerkmale 8 mit einem oder mehreren vorbestimmten, gespeicherten Erkennungsmerkmalen verglichen. Bei Übereinstimmung wird der von der Kamera 2 erfasste Bediener als autorisiert angesehen und von der Freigabevorrichtung 10 wird ein Freigabesignal 12 an eine Datenverarbeitungseinrichtungen 14 übergeben, um die Gestensteuerung zur Fernsteuerung des Kraftfahrzeugs freizugeben.

Die Erfindung ist jedoch nicht auf die Freigabe mittels erkannter biometrischer Merkmale beschränkt. Vielmehr kann das Freigabesignal 12 beispielsweise auch durch Knopfdruck aktiviert werden. Zur Erhöhung der Sicherheit kann auch eine Freigabe durch eine personenbezogene Pin-Nummer vorgesehen sein, um das Freigabesignal 12 zu aktivieren. Ebenso ist eine Übertragung des Freigabesignals 12 durch ein mobiles Kommunikationsgerät oder durch eine vorbestimmte, definierte Geste des Bedieners denkbar.

In der Auswerteeinrichtung 6 werden ferner aus den Signalen 4, wie beispielsweise Bilddaten oder elektromagnetische Felder, bei der Grundauswertung einzelne gestenrelevante Merkmale extrahiert. Die Gesten sind zum Beispiel durch die relative Lage der Hände zum Kopf beschreibbar. Durch die Verwendung von Gesten, die in der zwischenmenschlichen gestenbasierten Interaktion für die Kommunikation über größere räumliche Distanzen ohnehin genutzt werden, ist eine einfache, intuitive Fernsteuerung des Kraftfahrzeugs möglich.

Zur Vereinfachung der Extraktion gestenrelevanter Merkmale können auch bestimmte Gegenstände, wie zum Beispiel Flaggen, zum Ausüben der Gesten verwendet werden, die zum Beispiel von einer Bildverarbeitung einfacher erkannt werden.

In einer Datenbank werden die gängigen Gesten abgelegt, die zum Manövrieren eines Kraftfahrzeugs benötigt werden und/oder als Handsignale für Einweiser von Fahrzeugen gemäß BGV D29 vorgeschrieben sind. Im Rahmen einer Musteranalyse lassen sich durch einen Vergleich von erkannten Gestenmustern mit den gespeicherten Gesten entsprechende Gesteninformationen 16 erzeugen, die beispielsweise in Form eines oder mehrerer Vektoren der Datenverarbeitungseinrichtung 14 übergeben werden.

Die Grundauswertung erfolgt bevorzugt in einer in der Kamera 2 integrierten Elektronik, die eine entsprechende Auswerteeinrichtung 6 zur Bildanalyse aufweist. Alternativ ist es jedoch auch möglich, die Rohbilddaten der Kamera 2 an eine separate Auswerteeinrichtung 6 zu übergeben. Die Übertragung kann drahtgebunden oder drahtlos erfolgen.

Zur Gestensteuerung werden die Gesten je nach Position des Bedieners bzw. je nach Kameraposition unterschiedlich interpretiert. Ein vor dem Kraftfahrzeug stehender Bediener, der zum Beispiel von einer LDW-Kamera erfasst wird, übt für das Vorwärtsfahren des Kraftfahrzeugs intuitiv eine Winkbewegung aus, bei der mit einem oder beiden Armen das Fahrzeug zum Körper herangewinkt wird. Steht der Bediener jedoch seitlich des Kraftfahrzeugs und wird zum Beispiel von einer der BSD-Kameras erfasst, übt er für das Vorwärtsfahren des Kraftfahrzeugs eine seitliche Winkbewegung in gewünschter Fahrtrichtung aus.

Empfängt die Datenverarbeitungseinrichtung 14 ein Freigabesignal 12 zur Freigabe der Fernsteuerung des Kraftfahrzeugs durch einen autorisierten Bediener, werden aus den übermittelten Gesteninformationen 16 entsprechende Steuerbefehle bzw. Steuersignale 18 erzeugt, indem die Gesten als bestimmte Kommandos interpretiert werden.

Die Steuersignale 18 werden an die entsprechenden Steuereinheiten 20 der zu steuernden elektronischen Fahrzeugsysteme übergeben, die für eine Fernsteuerung des Kraftfahrzeugs aktiviert bzw. gesteuert werden müssen. Für die Geschwindigkeitsregelung wird zum Beispiel die elektronische Motorleistungssteuerung, insbesondere eines EGAS-Systems (elektronisches Gaspedal) bzw. eines EDC-Systems (elektronische Dieselregelung), angesteuert. Zum Abbremsen kann zum Beispiel die Steuereinheit des ESP-Systems (elektronisches Stabilitätsprogramm) oder EBS-Systems (elektronisches Bremssystem) angesteuert werden, um einen Bremseingriff an dem Kraftfahrzeug vorzunehmen. Die elektronische Getriebesteuerung kann zur Auswahl eines Vorwärts- bzw. des Rückwärtsgangs angesteuert werden.

Die Übertragung der Steuerbefehle 18 erfolgt bevorzugt über den CAN-Bus des Kraftfahrzeugs. Dadurch lassen sich vorteilhaft vorhandene Komponenten nutzen, um die ohnehin an den CAN-Bus angeschlossenen Steuereinheiten 20 anzusprechen.

Dabei ist es möglich, mehrere Steuersignale 18 an mehrere verschiedene Steuereinheiten 20 von verschiedenen elektronischen Fahrzeugsystemen zu übergeben, um ein komplexes Manövrieren des Kraftfahrzeugs durchzuführen.

Durch die erfindungsgemäße Vorrichtung zur Fernsteuerung des Kraftfahrzeugs ist der Fahrer vorteilhaft flexibel bei der Wahl seines Standortes. Ist zum Beispiel der Bereich vor einer Laderampe zum Be- und Entladen vom Fahrerhaus schlecht einsehbar, kann der Fahrer aussteigen und von außen sein Fahrzeug an die Laderampe heranfahren und in der Höhe anpassen. Gleiches gilt zum Beispiel beim Ankuppeln eines Anhängerfahrzeugs. Die Erfindung ist jedoch nicht auf eine Niveauregulierung bzw. Manövrierung des Kraftfahrzeugs beschränkt. Vielmehr lassen sich jedwede elektronischen Fahrzeugsysteme, welche eine Steuerung durch den Fahrer zulassen, auch von außerhalb des Kraftfahrzeugs über Gesten fernsteuern.

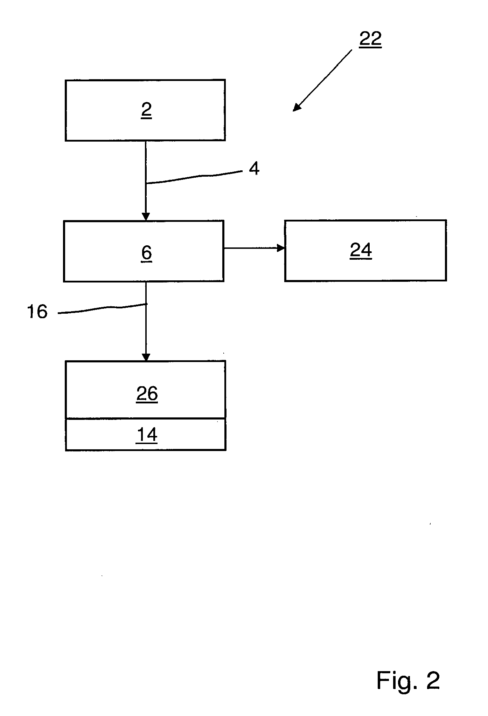

Fig. 2 zeigt eine schematische Darstellung zur Erläuterung der Verknüpfung von einem bestehenden kamerabasierten Fahrerassistenzsystem mit der Gestensteuerung zum Fernsteuern eines Kraftfahrzeugs.

Die Kamera 2 eines Fahrerassistenzsystems 28 kann je nach Einsatzbereich einen Bereich erfassen, welcher vor, neben oder hinter dem Kraftfahrzeug liegt. Ist eine Steuerung des Kraftfahrzeugs durch einen Bediener vor dem Fahrzeug gewünscht, können dessen Gesten beispielsweise von einer LDW-Kamera 2 erfasst werden, die üblicherweise als erste Funktionalität 24 des Fahrerassistenzsystems 28 die Erfassung von Spurmarkierungen auf der Fahrbahnoberfläche aufweist.

Ist eine Steuerung des Kraftfahrzeugs hingegen durch einen Bediener hinter dem Fahrzeug gewünscht, können dessen Gesten beispielsweise von einer Rückfahrkamera 2 erkannt werden, deren Bild üblicherweise als erste Funktionalität 24 des Fahrerassistenzsystems 22 dem Fahrer bei Rückwärtsfahrt die Überwachung des rückwärtigen Bereiches ermöglicht.

Ist eine Steuerung des Kraftfahrzeugs seitlich durch einen Bediener gewünscht, können dessen Gesten beispielsweise von mindestens einer BSD-Kamera 2 erfasst werden, die üblicherweise als erste Funktionalität 24 des Fahrerassistenzsystems 22 zur Überwachung so genannter "Toter Winkel" eingesetzt werden.

Die Erfindung ist jedoch nicht auf die vorstehend aufgeführten Fahrerassistenzsysteme 22 beschränkt. Vielmehr sind jedwede Fahrerassistenzsysteme 22 zur Verknüpfung mit der erfindungsgemäßen Gestensteuerung zum Fernsteuern des Kraftfahrzeugs geeignet, die über eine Kamera 2 zur Aufnahme eines Abbildes der Kraftfahrzeugumgebung verfügen.

Zum Ausüben der ersten Funktionalität 24 weist das Fahrerassistenzsystem 22 eine Bildverarbeitungseinrichtung auf, in der die Rohbilddaten 4 der Kamera 2 einer ersten Auswertung unterzogen werden. Bevorzugt wird bei einer Verknüpfung des Fahrerassistenzsystems 22 mit der Gestensteuerung die Bildverarbeitungseinheit als Auswerteeinrichtung 6 übernommen und entsprechend der Funktionen zum Ermitteln der Gesteninformationen und Erkennungsmerkmale erweitert. Das Fahrerassistenzsystem 22 bleibt mit seiner ersten Funktionalität 24 erhalten. Als eine weitere Funktionalität 26 wird vorteilhaft die Gestensteuerung mittels der Datenverarbeitungseinrichtung 14 mit der Auswerteeinrichtung 6 derart verbunden, dass die von der Auswerteeinrichtung 6 ermittelten Gesteninformationen 16 und Erkennungsmerkmale 8 von der Datenverarbeitungseinrichtungen 14 empfangen werden. Die Übertragung der Daten erfolgt dabei bevorzugt über den CAN-Bus des Kraftfahrzeugs.

Bevorzugt erfolgt auch bei einer Verknüpfung der Gestensteuerung mit einem vorhandenen Fahrerassistenzsystem 22 eine Freigabe des Verfahrens zum Fernsteuern des Kraftfahrzeugs mittels eines Freigabesignals 12, welches einen Bediener als autorisiert angibt.

Die weitere Funktionalität 26 des kamerabasierten Fahrerassistenzsystems 22 ist erfindungsgemäß die Steuerung des mindestens einen Fahrzeugsystems, wie beispielsweise die Niveauregelung des ECAS-Systems durch entsprechende Gesten eines Bedieners.

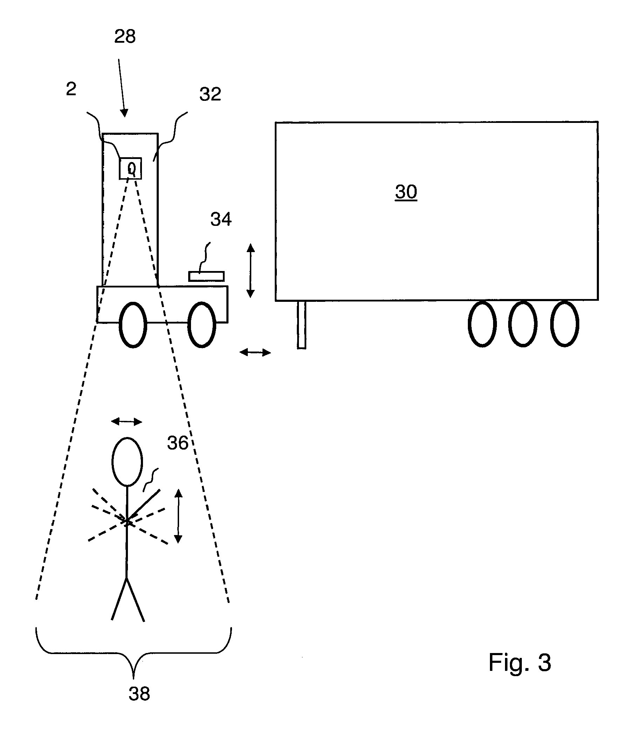

Fig. 3 zeigt eine schematische Darstellung einer Gestensteuerung zum Ankuppeln einer Sattelzugmaschine 28 an einen Sattelauflieger 30 als ein Ausführungsbeispiel der Erfindung. Die Sattelzugmaschine 28 besteht im Wesentlichen aus einem Führerhaus 32, Fahrzeugantrieb, Rädern sowie einer Kupplungsvorrichtung im Bereich einer Sattelplatte 34 im hinteren Bereich der Sattelzugmaschine 28. Der Sattelauflieger 30 besteht im Wesentlichen aus einem Ladebereich, in welchem die Nutzlast verstaut wird, einer Ankuppelvorrichtung im vorderen Bereich, integrierte Stützbeine und mehrere, meist starr aufgehängte Räder im hinteren Bereich des Sattelaufliegers 30. Im angekuppelten Zustand liegt der Sattelauflieger 30 auf der Sattelplatte 34 auf, wobei die Kupplungsvorrichtung und die Ankuppelvorrichtung eine Befestigung des Sattelaufliegers 30 auf der Sattelplatte 34 bewirken.

Zum Ankuppeln muss die Sattelzugmaschine 28 punktgenau an den Sattelauflieger 30 heranfahren und zwar derart, dass die Sattelzugmaschine 28 keinen seitlichen Versatz aufweist und die Rückseite der Sattelzugmaschine 28 an die Vorderseite des Sattelauflieger 30 grenzt. Ist dies nicht der Fall, muss noch einmal an den Sattelauflieger 30 herangefahren werden.

Für diesen Vorgang wird der Fahrer idealer Weise von einem Einweiser unterstützt, um Schäden aufgrund von misslungenen Ankuppelversuchen zu vermeiden. Mit der erfindungsgemäßen Vorrichtung ist es vorteilhaft möglich, dass der Fahrer die Sattelzugmaschine 28 verlässt und von außen als Bediener 36 die Sattelzugmaschine 28 über Gesten fernsteuert und die Sattelzugmaschine 28 so an den Sattelauflieger 30 heranführt. Dadurch hat der Fahrer als Bediener 36 der Fernsteuerung jederzeit die uneingeschränkte Sicht auf die Sattelzugmaschine 28 und den Sattelauflieger 30 und ein separater Einweiser wird nicht benötigt.

Zum Manövrieren der Sattelzugmaschine 28 wird der Bediener 36 von einer Kamera 2 aufgenommen, die einen vorbestimmten Bereich 38 außerhalb der Sattelzugmaschine 28 erfasst. Die erfindungsgemäße Gestensteuerung erkennt die Gesten des Bedieners 36 und leitet daraus entsprechende Gesteninformationen 16 ab, die dann als Kommandos interpretiert und in entsprechende Steuersignale 18 transformiert werden. Diese Steuersignale 18 gelangen über einen Übertragungsweg, bevorzugt dem CAN-Bus des Kraftfahrzeugs, an die zu steuernden elektronischen Fahrzeugsysteme, welche durch die Gesten angesprochen werden und die Kraftfahrzeugsteuerung übernehmen.

Um die Sattelzugmaschine 28 beispielsweise rückwärts an den Sattelauflieger 30 heran zu manövrieren, wird die entsprechende Winkbewegung des Bedieners 36 in Steuersignale 18 umgewandelt, welche das elektronische Getriebe zunächst in den Rückwärtsgang schalten und die elektronische Motorleistungssteuerung zur Geschwindigkeitsregelung steuern. Dabei kann die Geschwindigkeit oder Intensität der Winkbewegung mit erfasst werden und in eine entsprechende Dynamik der Kraftfahrzeugsteuerung des Kraftfahrzeugs umgewandelt werden, so dass die Geschwindigkeit, mit der die Sattelzugmaschine 28 an den Sattelauflieger 30 heranfährt, ebenfalls über Gesten geregelt werden kann.

Eine entsprechende Stopp-Geste wird beispielsweise in ein zugehöriges Steuersignal 18 für das EBS-System umgesetzt, welches elektronisch die Bremsen der Sattelzugmaschine 28 aktiviert.

Ist die Sattelzugmaschine 28 dicht an den Sattelauflieger 30 herangefahren, muss diese eventuell in der Höhe verstellt werden. Das Einstellen der Kupplungshöhe erfolgt bevorzugt über die elektronische Luftfederungsanlage (ECAS), welche ebenfalls über Gesten von einem Bediener 36 ferngesteuert werden kann. Mit einer entsprechenden Auf- und Abbewegung der Hand oder Hände kann die Höhe der Sattelzugmaschine 28 derart eingestellt werden, dass ein Kontakt zwischen Sattelplatte 34 und Aufgleitplatte entsteht. Durch Zurückfahren werden die Sattelzugmaschine 28 und der Sattelauflieger 30 angekuppelt.

Das Absatteln des Sattelaufliegers 30 kann in analoger Weise ebenfalls durch Gesten gesteuert erfolgen.

Der vorstehend beschriebene Kupplungsvorgang zeigt jedoch lediglich ein mögliches Ausführungsbeispiel eines elektronischen Kraftfahrzeugsteuersystems. Das erfindungsgemäße Verfahren zum Fernsteuern des Kraftfahrzeugs ist für jedwede Anhängerkupplung anwendbar, wodurch vorteilhaft jeder Kupplungsvorgang sicherer und einfacher ausführbar ist.

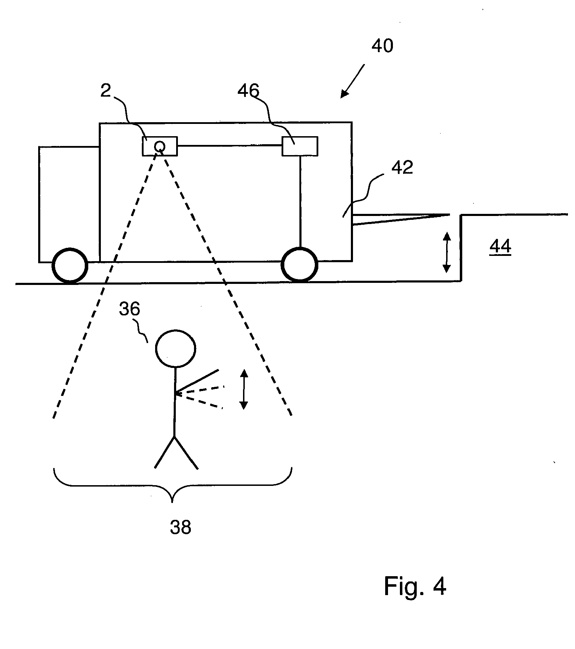

Fig. 4 zeigt eine schematische Darstellung einer Gestensteuerung einer Niveauregulierung eines Kraftfahrzeugs 40 als ein weiteres alternatives Ausführungsbeispiel eines elektronischen Kraftfahrzeugsteuersystems. Durch das erfindungsgemäße Verfahren zum Fernsteuern des Kraftfahrzeugs 40 lässt sich besonders einfach die Höhe des Fahrzeugaufbaus 42 an die Höhe einer Laderampe 44 anpassen.

Dazu wird von einer am Fahrzeug angebrachten Kamera 2 ein vorbestimmter Bereich 38 erfasst, in dem sich ein Bediener 36 zum Fernsteuern des Kraftfahrzeugs 40 aufhält. Von diesem Bereich 38 aus hat der Bediener 36 einen uneingeschränkten Blick auf das Kraftfahrzeug 40 und die Laderampe 44.

Durch einfaches Auf- und Abwinken mit der Hand oder mit beiden Händen lässt sich die Höhe des Kraftfahrzeugs 40 intuitiv verstellen. Dazu werden die Winkbewegungen des Bedieners 36 von der Kamera 2 aufgenommen. Die aufgenommenen Bilddaten 4 werden einer Grundauswertung unterzogen, bei der aus den Bilddaten 4 mittels Objekt- bzw. Mustererkennung Gesteninformationen 16 extrahiert werden.

Die Gesteninformationen 16 werden entweder direkt einer ECAS-Steuereinheit 46 zur Niveauregulierung übergeben oder erst in Steuerbefehle 18 bzw. Steuersignale 18 umgewandelt und als Steuersignale 18 der ECAS-Steuereinheit 46 übergeben.

Die ECAS-Steuereinheit 46 regelt dann den Druck in den Luftfederbälgen, um die Höhe des Fahrzeugaufbaus 42 zu verändern. Dazu ist jedem Luftfederbalg ein hier nicht dargestelltes Belüftungs- bzw. Entlüftungsventil zugeordnet.

Mittels der erfindungsgemäßen Vorrichtung zur Fernsteuerung des Kraftfahrzeugs 40 ist es für einen Fahrer oder Einweiser, welcher als Bediener 36 die Fernsteuerung des Kraftfahrzeugs 40 übernimmt, besonders einfach das Kraftfahrzeug 40 zum Be- und/oder Entladen an die Laderampe 44 zu fahren und in der Höhe anzupassen, da dieser Bereich von außerhalb des Kraftfahrzeugs 40 sehr gut einsehbar ist.

Um eine Benutzung der Fernsteuerung durch Unbefugte zu verhindern, ist für die vorstehend beschriebenen Ausführungsbeispiele gemäß Fig. 3 und Fig. 4 jeweils eine nicht extra dargestellte Freigabeeinrichtung 10 vorgesehen, um die Gestensteuerung freizugeben.

Die Freigabeeinrichtung 10 ist in der Lage, den Willen zur Fernsteuerung von einem von der Kamera 2 erfassten Bediener 36 zu erkennen, und diesen Bediener 36 als autorisiert oder nicht autorisiert zu identifizieren. Ist der von der Kamera 2 erfasste Bediener 36 zur Fernsteuerung des Kraftfahrzeugs 40 autorisiert und sein Wille zur Fernsteuerung erkannt, wird ein entsprechendes Freigabesignal 12 der Datenverarbeitungseinrichtung 14 übertragen.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Verfahren zum Fernsteuern eines Kraftfahrzeugs (28; 40), insbesondere Nutzfahrzeug, wobei das Kraftfahrzeug (28; 40) mindestens eine Steuereinheit (20) aufweist, die mit mindestens einem elektronischen Fahrzeugsystem zur Kraftfahrzeugsteuerung kommunikativ in Verbindung steht **dadurch gekennzeichnet, dass**
Signale (4), in denen Gesteninformationen (16) aus Gesten eines Bedieners (36) enthalten sind, mittels mindestens einer Gesten-Empfangseinrichtung (2) des Kraftfahrzeugs (28; 40) aus einem Bereich (38) außerhalb des Kraftfahrzeugs (28; 40) empfangen werden,
aus den Signalen (4) der mindestens einen Gesten-Empfangseinrichtung (2) mittels einer Logik-Einrichtung (7) die Gesteninformationen (16) aus Gesten eines Bedieners (36) für den Fall ermittelt werden, dass sich der Bediener (36) innerhalb des Bereiches (38) außerhalb des Kraftfahrzeugs (28; 40) befindet aus dem die empfangenen Signale (4) stammen und
aus den Gesteninformationen (16) der erfassten Gesten des Bedieners (36) Steuerbefehle (18) erzeugt werden, wobei die Steuerbefehle (18) mittels der Logik-Einrichtung (7) der mindestens einen Steuereinheit (20) zur Kommunikation mit dem mindestens einen elektronischen Fahrzeugsystem zur Kraftfahrzeugsteuerung übergeben werden, um das Kraftfahrzeug (28; 40) anhand dieser Gesten zu steuern.

2. Verfahren nach Anspruch 1,
**dadurch gekennzeichnet, dass**
das Verfahren zum Fernsteuern des Kraftfahrzeugs (28; 40) freigegeben wird, falls der Bediener (36) als autorisiert erkannt wird, wobei die Autorisierung anhand von ermittelter Erkennungsmerkmale (8) eines Bedieners (36) oder durch ein Freigabesignal (12) erfolgt.

3. Verfahren nach Anspruch 1 oder 2,
**dadurch gekennzeichnet, dass**
die Gesteninformationen (16) mittels einer in der Logik-Einrichtung (7) enthaltenen Auswerteeinrichtung (6) aus den Bilddaten (4) ermittelt werden und
die aus den Gesteninformationen (16) der erfassten Gesten des Bedieners (36) erzeugten Steuerbefehle (18) mittels einer in der Logik-Einrichtung (7) enthaltenen Datenverarbeitungseinrichtung (14) erzeugt werden.

4. Verfahren nach einem der vorhergehenden Ansprüche,
**dadurch gekennzeichnet, dass**
als Signale (4) Bilddaten einer Kamera erzeugt werden, wobei die Kamera als Gesten-Empfangseinrichtung (2) eine Kamera eines kamerabasierten Fahrerassistenzsystems (22) ist und wobei das Fahrerassistenzsystem (22) als eine erste Funktionalität (24) mindestens eine Regelfunktion und/oder eine Signalisierungsfunktion aufweist und
das Fahrerassistenzsystem (22) als eine weitere Funktionalität (26) das Erzeugen der Gesteninformationen (16) der erfassten Gesten des Bedieners (36) zur Kraftfahrzeugsteuerung aufweist.

5. Verfahren nach einem der vorhergehenden Ansprüche,
**dadurch gekennzeichnet, dass**
von den mindestens einen elektronischen Fahrzeugsystemen zur Kraftfahrzeugsteuerung ein elektronisches Fahrzeugsystem Teil einer elektronischen Luftfederungsanlage (ECAS) ist und das Anheben und Absenken eines Fahrzeugaufbaus (42) des Kraftfahrzeugs (28; 40) anhand von erkannten Gesten eines Bedieners (36) durchgeführt wird.

6. Verfahren nach einem der vorhergehenden Ansprüche,
**dadurch gekennzeichnet, dass**
das Kraftfahrzeug (28; 40) anhand der Steuerbefehle (18), welche aus den Gesteninformationen (16) der erfassten Gesten des Bedieners (36) erzeugt werden, zum Ankuppeln an ein Anhängefahrzeug entsprechend manövriert wird.

7. Vorrichtung zur Fernsteuerung eines Kraftfahrzeugs (28; 40), insbesondere Nutzfahrzeug, wobei das Kraftfahrzeug (28; 40) mindestens eine Steuereinheit (20) aufweist, die mit mindestens einem elektronischen Fahrzeugsystem zur Kraftfahrzeugsteuerung kommunikativ in Verbindung steht **gekennzeichnet durch**
mindestens eine Gesten-Empfangseinrichtung (2) an dem Kraftfahrzeug (28; 40), wobei mittels der mindestens einen Gesten-Empfangseinrichtung (2) Signale, (4) in denen Gesteninformationen (16) aus Gesten eines Bedieners (36) enthalten sind, aus einem Bereich (38) außerhalb des Kraftfahrzeugs (22; 40) empfangbar sind,
eine Logik-Einrichtung (7) zum Ermitteln von Gesteninformationen (16) aus den Signalen (4) der Gesten-Empfangseinrichtung (2), wobei die Gesteninformationen (16) aus Gesten eines Bedieners (36) ermittelbar.sind, für den Fall, dass sich der Bediener (36) innerhalb des Bereiches (38) außerhalb des Kraftfahrzeugs (28; 40) befindet aus dem die empfangenen Signale (4) stammen und >
eine weitere Ausgestaltung der Logik-Einrichtung (7) zum Erzeugen von Steuerbefehlen (18) aus den Gesteninformationen (16) der erfassten Gesten des Bedieners (36), wobei die Steuerbefehle (18) mittels der Logik-Einrichtung (7) der mindestens einen Steuereinheit (20) zur Kommunikation mit dem mindestens einem elektronischen Fahrzeugsystem zur Kraftfahrzeugsteuerung übertragbar sind.

8. Vorrichtung nach Anspruch 7,
**dadurch gekennzeichnet, dass**
die Logik-Einrichtung (7) eine Freigabeeinrichtung (10) aufweist, welche derart ausgestaltet ist, um das Verfahren zum Fernsteuern eines Kraftfahrzeugs (28; 40) freizugeben, falls der Bediener (36) als autorisiert erkannt wird, wobei die Autorisierung anhand ermittelter Erkennungsmerkmale (8) eines Bedieners (36) oder anhand eines Freigabesignals (12) erfolgt.

9. Vorrichtung nach einem der Ansprüche 7 oder 8,
**dadurch gekennzeichnet, dass**
die Logik-Einrichtung (7) eine Auswerteeinrichtung (6) aufweist, welche derart ausgestaltet ist, um aus den Signalen (4), in denen Gesteninformationen (16) enthalten sind, diese Gesteninformationen (16) zu ermitteln und die Logik-Einrichtung (7) eine Datenverarbeitungseinrichtung (14) aufweist, welche derart ausgestaltet ist, um aus den Gesteninformationen (16) der erfassten Gesten des Bedieners (36) Steuerbefehle (18) zu erzeugen.

10. Vorrichtung nach einem der Ansprüche 7 bis 9,
**dadurch gekennzeichnet, dass**
die Gesten-Empfangseinrichtung (2) eine Kamera eines kamerabasierten Fahrerassistenzsystems (22) ist, wobei das Fahrerassistenzsystem (22) als eine erste Funktionalität (24) mindestens eine Regelfunktion und/oder eine Signalisierungsfunktion aufweist und
das Fahrerassistenzsystem (22) als eine weitere Funktionalität (24) das Erzeugen der Gesteninformationen (16) der erfassten Gesten des Bedieners (36) zur Kraftfahrzeugsteuerung aufweist.

11. Vorrichtung nach einem der Ansprüche 7 bis 10,
**gekennzeichnet durch**
einen CAN-Bus des Kraftfahrzeugs (28; 40), welcher derart ausgestaltet ist, um die Gesteninformationen (16) und/oder die aus den Gesteninformationen (16) ermittelten Steuerbefehle (18) derjenigen Steuereinheit (20) zu übergeben, welche mit dem mindestens einen elektronischen Fahrzeugsystem zur Kraftfahrzeugsteuerung kommunikativ in Verbindung steht.

12. Vorrichtung nach einem der Ansprüche 7 bis 11,
**dadurch gekennzeichnet, dass**
von den mindestens einen elektronischen Fahrzeugsystemen zur Kraftfahrzeugsteuerung ein elektronisches Fahrzeugsystem Teil einer elektronischen Luftfederungsanlage (ECAS) ist, wobei das elektronische Fahrzeugsystem derart ausgestaltet ist, um das Anheben und Absenken eines Fahrzeugaufbaus (42) des Kraftfahrzeugs (28; 40) anhand von erkannten Gesten des Bedieners (36) durchzuführen.

13. Vorrichtung nach einem der Ansprüche 7 bis 12,
**dadurch gekennzeichnet, dass**
das Kraftfahrzeug (28; 40) anhand der Steuerbefehle (18), welche aus den Gesteninformationen (16) der erfassten Gesten des Bedieners (36) erzeugt werden, zum Ankuppeln an ein Anhängefahrzeug entsprechend manövrierbar ist.

14. Elektronisches Kraftfahrzeugsteuersystem zur Fernsteuerung eines Kraftfahrzeugs (28; 40), insbesondere Nutzfahrzeug, mit mindestens einem elektronischen Fahrzeugsystem,
**gekennzeichnet durch**
eine Vorrichtung zur Fernsteuerung des Kraftfahrzeugs nach einem der Ansprüche 7 bis 13 und/oder
eine Ausgestaltung des elektronischen Kraftfahrzeugsteuersystems derart, um das Verfahren zum Fernsteuern des Kraftfahrzeugs (28; 40) gemäß einem der Ansprüche 1 bis 6 auszuüben.

15. Kraftfahrzeug, insbesondere Nutzfahrzeug,
**gekennzeichnet durch**
eine Vorrichtung nach einem der Ansprüche 7 bis 13 und/oder eine Ausgestaltung des Kraftfahrzeugs (28; 40) derart, um ein Verfahren zum Fernsteuern des Kraftfahrzeugs (28; 40) nach einem der Ansprüche 1 bis 6 auszuüben und/oder
ein elektronisches Kraftfahrzeugsteuersystem nach Anspruch 14.
